# EUROPÄISCHE PATENTSCHRIFT

(11) **EP 1 002 374 B1**
(45) Veröffentlichungstag und Bekanntmachung des Hinweises auf die Patenterteilung: **07.11.2001**
(21) Anmeldenummer: 97937456.8
(22) Anmeldetag: 14.08.1997
(51) Int. Cl.: H04B 1/713, H04B 7/26

(54) **VERFAHREN UND EINRICHTUNG ZUM ERZEUGEN EINER TRÄGERFREQUENZ-SEQUENZ**
METHOD AND DEVICE FOR PRODUCING A CARRIER FREQUENCY SEQUENCE
PROCEDE ET DISPOSITIF POUR PRODUIRE UNE SEQUENCE DE FREQUENCES PORTEUSES

(43) Veröffentlichungstag der Anmeldung: 24.05.2000
(73) Patentinhaber: SIEMENS AKTIENGESELLSCHAFT, 80333 München (DE)
(72) Erfinder: KOCKMANN, Jürgen, D-48599 Gronau (DE); SYDON, Uwe, D-40474 Düsseldorf (DE)
(86) Internationale Anmeldenummer: DE9701746
(87) Internationale Veröffentlichungsnummer: WO9909669

(56) Entgegenhaltungen:
- US-A- 4 578 816
- US-A- 4 606 040
- US-A- 5 586 141

## Beschreibung

Die vorliegende Erfindung bezieht sich auf ein Verfahren und eine Einrichtung zur Erzeugung einer Sequenz von Trägerfrequenzen, die für eine Mobilfunkübertragung verwendet werden.

Als Verfahren zur Übertragung von Daten auf mehreren Trägerfrequenzen ist das sogenannte Frequency Hopping Spread Spectrum (Frequenzsprung-Streuspektrum)-System bekannt. Unter einem Frequency Hopping Spread Spectrum-System ist dabei ein System zu verstehen, bei dem zur Funkübertragung von Daten eine Vielzahl an Trägerfrequenzen bereitgestellt wird und die aktuell verwendete Trägerfrequenz periodisch gewechselt wird. Insbesondere bei einem Zeitmultiplex(TDMA)-System kann ein Wechsel der Trägerfrequenz nach jedem Zeitschlitz oder Zeitrahmen der Zeitmultiplexübertragung oder einem ganzzahligen Vielfachen davon erfolgen. Ein solches Frequency Hopping Spread Spectrum-System hat Vorteile dahingehend, daß die Energie der gesamten Funkübertragung über sämtliche Trägerfrequenzen verteilt wird. Dies ist insbesondere von Bedeutung, wenn ein allgemein verfügbares Frequenzband, wie beispielsweise das 2,4 GHz ISM (Industrial, Scientific, Medical)-Band verwendet wird. Für die Verwendung dieses Frequenzbandes ist gemäß den einschlägigen Vorschriften (in den USA die von der Federal Communications Commission "FCC part 15") eine Obergrenze für die maximal pro Trägerfrequenz auftretende Energie festgelegt, um eine Störung anderer Teilnehmer so gering wie möglich zu halten. Weiterhin schreibt die "FCC part 15" vor, daß 75 verschiedene Trägerfrequenzen verwendet werden müssen.

Als weiterer Vorteil des Frequency Hopping Spread Spectrum-Systems ist zu nennen, daß durch das Bereitstellen einer großen Anzahl von Trägerfrequenzen das System unempfindlicher gegen Störungen wird. Darüber hinaus erhöht sich die Abhörsicherheit des Systems gegenüber Dritten, da der Dritte in der Regel nicht weiß, auf welche Trägerfrequenz nach einem gewissen Zeitraum gewechselt wird.

Die Sequenz an Trägerfrequenzen, die zur Übertragung nacheinander verwendet werden, wird durch einen Algorithmus ermittelt. Ein solcher Algorithmus ist in identischer Weise in der Feststation sowie jeder Mobilstation der Mobilfunkübertragung implementiert. Wenn somit ein Mobilteil mit der zugehörigen Feststation synchronisiert ist, werden das Mobilteil und die Feststation synchron miteinander die durch die Sequenz des Algorithmus vorgegebenen Trägerfrequenzwechsel vornehmen.

Eine besondere Betriebsart ist der Störer-Ausweichmodus. Wenn der Störer-Ausweichmodus eingeschaltet ist, wird eine als gestört erfaßte Trägerfrequenz, die durch die Sequenz eigentlich vorgegeben ist, nicht verwendet, und es wird dafür eine andere (ungestörte) Trägerfrequenz verwendet.

Ein Problem mit dem Störer-Ausweichmodus tritt auf, wenn sich ein Mobilteil in dem sogenannten Idle Locked Mode befindet. Der Idle Locked Mode ist dabei eine Betriebsart, bei der ein Mobilteil zwar empfangsbereit, aber ohne aktive Kommunikation mit der Feststation in Verbindung steht. Insbesondere zur Energieersparnis synchronisiert ein Mobilteil, das also in dem Idle Locked Mode in einer Art Stand-By-Zustand empfangsbereit ist, seine Trägerfrequenzen lediglich nach m Trägerfrequenzen nach, da ja jede Nachsynchronisierung eine Verbindung zu der Feststation zum Empfang wenigstens eines Zeitschlitzes benötigt und somit Energie verbraucht. Das Mobilteil in dem Idle Locked Mode, das also nur in jedem m-ten Rahmen sich auf die Basisstation nachsynchronisiert, tauscht also in den übrigen Rahmen-Zeitdauern, d. h. während des ersten bis (m-1)-ten Rahmens keine Informationen mit der Basisstation aus. Es besteht daher das Problem, daß ein Mobilteil, das sich in dem Idle Locked Mode befindet, von der Basisstation nicht über Sperrungen und Freigaben von gewissen Frequenzen unterrichtet werden kann. Somit besteht die Gefahr, daß das Mobilteil im Idle Locked Mode (Multiframe Mode) die Synchronisierung mit der Basisstation völlig verliert.

Die vorliegende Erfindung hat daher zur Aufgabe, ein Verfahren und eine Einrichtung zum Erzeugen einer Trägerfrequenz-Sequenz zu schaffen, die gewährleisten können, daß sich ein Mobilteil, daß sich nur in jedem m-ten Rahmen auf die Basisstation synchronisiert, sicher auf die Basisstation synchronisiert bleibt.

Gemäß der Erfindung ist also ein Verfahren zum Erzeugen einer Sequenz an Trägerfrequenzen fx für eine Mobilfunkübertragung vorgesehen. Ein erster Algorithmus gibt dabei den Wert der Trägerfrequenzen fx mit dem Laufparameter (n-1)×m +1 bis (n×m)-1 vor. n ist dabei eine ganze Zahl größer gleich als 1 und m ist eine vorbestimmte ganze Zahl größer als 1, die gewissermaßen die Periodizität des Idle Locked Mode angibt. Dies bedeutet, daß, beispielsweise wenn m gleich 16 ist, der erste Algorithmus die Trägerfrequenzen für die Rahmen oder Zeitschlitzen mit dem Laufparameter 1 bis 15, 17 bis 31, etc., d. h. beispielsweise für die Rahmen 1 bis 15, 17 bis 31, etc. vorgibt. Gemäß der Erfindung ist weiterhin ein zweiter, von dem ersten Algorithmus unabhängiger Algorithmus vorgesehen, wobei der zweite Algorithmus den Wert der Trägerfrequenzen fxₙₓₘ vorgibt. In dem genannten Beispiel gibt also der zweite Algorithmus den Wert für die Trägerfrequenzen jedes 16. Rahmens vor.

Nur der erste Algorithmus kann eine Möglichkeit zur Sperrung gewisser Werte und zum Ersetzen der gesperrten Werte durch einen anderen Wert aufweisen. Somit läßt sich durch den ersten Algorithmus für die Laufparameter (n-1)×m +1 bis (n×m) -1 ein Störer-Ausweichmodus realisieren.

Der zweite Algorithmus kann bei der Anmeldung eines Mobilteils an eine Basisstation von der Basisstation festgelegt werden.

Der erste Algorithmus kann zu Beginn eines Aufbaus einer Verbindung zwischen einem Mobilteil und einer Basisstation festgelegt werden.

Der zweite Algorithmus kann durch einen Zufallszahlengenerator realisiert werden.

Der zweite Algorithmus kann alternativ durch eine sequentiell abzuarbeitende Frequenztabelle erzeugt werden. Diese Frequenztabelle kann insbesondere anhand der PIN-Codenummer des betreffenden Mobilteils bestimmt werden.

Gemäß der Erfindung ist weiterhin eine Einrichtung zum Erzeugen einer Sequenz an Trägerfrequenzen fx vorgesehen, wobei die Trägerfrequenzen Anwendungen bei Mobilfunkübertragung finden. Dabei ist eine erste Berechnungseinrichtung für einen ersten Algorithmus vorgesehen, wobei der erste Algorithmus den Wert der Trägerfrequenzen fx_{(n-1)xm +1} bis fx(_{nxm -1} vorgibt. Wie bereits ausgeführt, ist n dabei eine ganze Zahl als Laufparameter und m eine vorbestimmte ganze Zahl größer als 1. Weiterhin ist eine zweite Berechnungseinrichtung für einen zweiten, von dem ersten Algorithmus unabhängigen Algorithmus vorgesehen. Die zweite Berechnungseinrichtung gibt den Wert für die Trägerfrequenzen fx_{n×m}, d. h. also jede m-te Trägerfrequenz vor.

Die erste Berechnungseinrichtung kann eine Einrichtung zur Sperrung gewisser Werte und eine Einrichtung zum Ersetzen der gesperrten Werte durch einen anderen Wert aufweisen, wodurch ein sogenannter Störer-Ausweichmodus realisiert werden kann.

Die zweite Berechnungseinrichtung kann in einer Basisstation vorgesehen sein und den Algorithmus bei der Anmeldung eines Mobilteils an die Basisstation festlegen.

Die erste Berechnungseinrichtung kann in einer Basisstation vorgesehen sein und den ersten Algorithmus zu Beginn eines Aufbaus einer Verbindung zwischen einem Mobilteil und der Basisstation festlegen.

Die zweite Berechnungseinrichtung kann einen Zufallszahlengenerator aufweisen.

Die zweite Berechnungseinrichtung kann alternativ oder zusätzlich eine sequentiell abzuarbeitende Frequenztabelle aufweisen, wobei die Frequenztabelle beispielsweise anhand der PIN-Codenummer des Mobilteils bestimmt werden kann.

Gemäß der Erfindung ist weiterhin eine Basisstation für Mobilfunkanwendungen vorgesehen, die eine Einrichtung zum Erzeugen einer Sequenz an Trägerfrequenzen fx der oben genannten Art aufweist.

Weiterhin ist gemäß der Erfindung ein Mobilfunksystem mit einer Basisstation und wenigstens einem Mobilteil vorgesehen, wobei die Basisstation eine Einrichtung zum Erzeugen einer Sequenz an Trägerfrequenzen fx der oben genannten Art aufweist.

Die Erfindung wird nun anhand eines Ausführungsbeispiels und bezugnehmend auf die begleitenden Zeichnungen näher erläutert.
Es zeigen:
Fig. 1 ein Mobilfunk-Übertragungssystem mit einer erfindungsgemäßen Feststation,
Fig. 2 einen Zeitrahmen eines Datenübertragungsstandards, wie er bei der vorliegenden Erfindung anwendbar ist,
Fig. 3 detailliert den inneren Aufbau einer erfindungsgemäßen Feststation (Basistation), und
Fig. 4 eine schematische Darstellung eines Frequency Hopping Spread Spectrum-Systems insbesondere auch für den Fall eines Störer-Ausweichmodus.

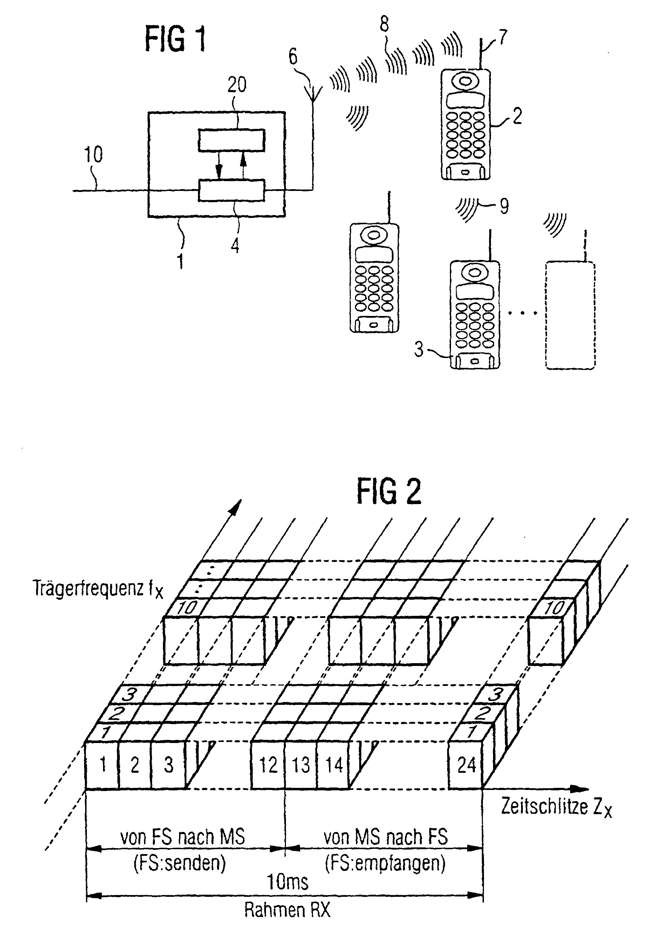

Bezugnehmend auf Fig. 1 soll zuerst der allgemeine Aufbau einer Mobilfunkübertragung erläutert werden. Wie allgemein üblich weist die Anordnung zur Funkübertragung von Daten eine Feststation 1 und mehrere Mobilteile (Mobilstationen), kabellose Telefone 2, 3 ... auf. Die Feststation 1 ist mit einer Endstellenleitung 10 mit dem Festnetz verbunden. Zwischen der Feststation 1 und der Endstellenleitung 10 kann zur Kommunikation eine Schnittstellenvorrichtung vorgesehen sein, die nicht dargestellt ist. Die Feststation 1 weist eine Antenne 6 auf, mittels der beispielsweise über einen ersten Funkübertragungsweg 8 mit dem Mobilteil 2 oder über einen zweiten Funkübertragungsweg 9 eine Kommunikation mit dem Mobilteil 3 stattfindet. Die Mobilteile 2, 3 ... weisen zum Empfang bzw, zum Senden von Daten jeweils eine Antenne 7 auf. In Fig. 1 ist schematisch der Zustand dargestellt, in dem die Feststation 1 mit dem Mobilteil 2 aktiv kommuniziert und somit Daten austauscht. Das Mobilteil 3 befindet sich hingegen in dem sogenannten Idle Locked Modus, in dem es Stand-By-artig auf einen Anruf von der Feststation 1 her wartet. In diesem Zustand kommuniziert das Mobilteil 3 nicht ständig mit der Feststation 1, sondern empfängt vielmehr nur in periodischen Zeitabständen die Daten beispielsweise eines Zeitschlitzes, die zur Nachsynchronisierung der Trägerfrequenzen fx notwendig sind.

Der interne Aufbau der Feststation 1 ist in Fig. 1 schematisch dargestellt. Die Sprachinformationsdaten werden einem HF-Modul 4 zugeführt, das von einer Trägerfrequenz-Sequenzeinheit angesteuert wird. Der genaue Aufbau einer erfindungsgemäßen Feststation 1 wird später beschrieben.

Bezugnehmend auf Fig. 2 soll nunmehr ein Übertragungsstandard erläutert werden, wie er bei der vorliegenden Erfindung verwendet werden kann. Wie aus Fig. 2 ersichtlich werden auf mehreren Trägerfrequenzen fx, von denen zehn dargestellt sind, zeitlich nacheinander Daten in mehreren Zeitschlitzen, im dargestellten Fall 24 Zeitschlitze Zx, in einem Zeitmultiplex-Verfahren TDMA (Time Division Multiple Access)übertragen. Im dargestellten Fall wird dabei im Wechselbetrieb (Duplex) gearbeitet, d. h., nachdem die ersten zwölf Zeitschlitze Zx gesendet worden sind, wird auf Empfang geschaltet, und es werden in der Gegenrichtung die zweiten zwölf Zeitschlitze (Z13 bis Z24) von der Feststation empfangen.

Für den Fall, daß der sogenannte DECT-Standard zur Übertragung verwendet wird, beträgt die zeitliche Dauer eines Zeitrahmens 10 ms, und es sind 24 Zeitschlitze Zx vorgesehen, nämlich zwölf Zeitschlitze für die Übertragung von der Feststation zu Mobilteilen und weitere zwölf Zeitschlitze Zx zur Übertragung von den Mobilteilen zu der Feststation. Gemäß dem DECT-Standard sind zehn Trägerfrequenzen fx zwischen 1,88 GHz und 1,90 GHz vorgesehen.

Natürlich sind für die vorliegende Erfindung andere Rahmenstrukturen, bspw. mit im Vergleich zum DECT-Standard halbierter Zeitschlitzanzahl, genauso geeignet.

Die vorliegende Erfindung findet insbesondere Anwendung für Übertragungen im sogenannten 2,4 GHz-ISM (Industrial, Scientific, Medical)-Frequenzband. Das allgemein zugängliche ISM-Frequenzband weist eine Bandbreite von 83,5 MHz auf. Über diese 83,5 MHz müssen gemäß der Vorschrift "FCC part 15" mindestens 75 Trägerfrequenzen fx verteilt sein. Besonders vorteilhaft ist eine Aufteilung der Bandbreite von 83,5 MHz auf 96 Trägerfrequenzen, d. h. ein Kanalabstand von 864 kHz. Die oben genannten Frequenzbänder und Standards sind rein als Beispiel genannt. Grundsätzliche Voraussetzung für eine Anwendbarkeit bei der vorliegenden Erfindung ist es lediglich, daß ein sogenanntes Frequency Hopping Spread Spectrum verwendet wird, d. h. daß mehrere Trägerfrequenzen zur Verfügung stehen, und daß die zur Übertragung gewählte Trägerfrequenz periodisch gewechselt wird. Für einen solchen Wechsel ist es vorteilhaft, wenn die Daten in Zeitschlitzen Zx übertragen werden (Zeitmultiplex-Verfahren). Geeignet ist also beispielsweise der DECT-Standard sowie jeder andere abgewandelte und auf diesem DECT-Standard basierende Standard.

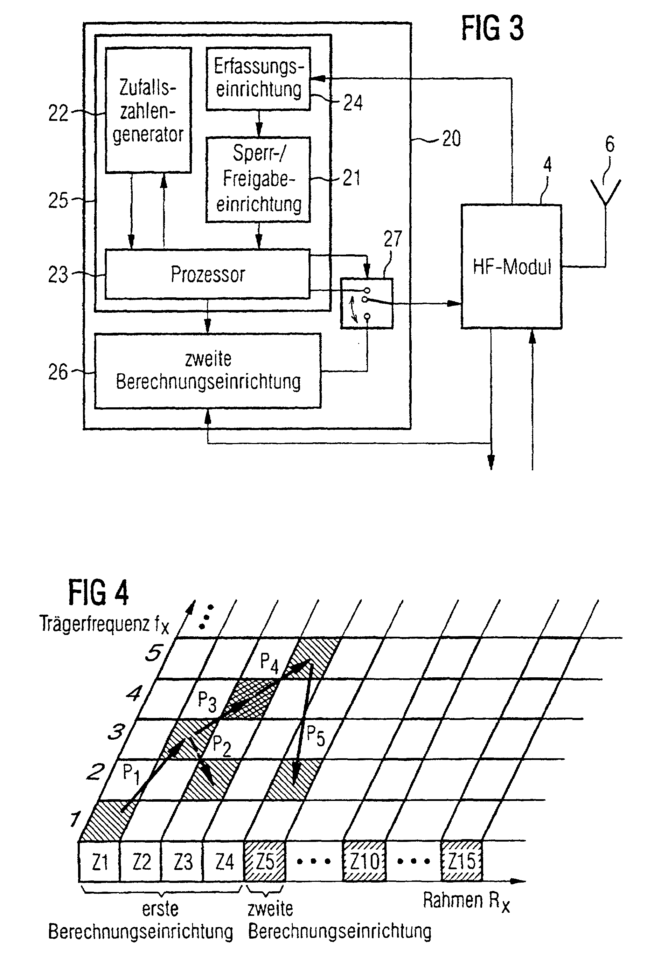

Bezugnehmend auf Fig. 3 soll nun der innere Aufbau einer erfindungsgemäßen Feststation 1 näher erläutert werden. Wie in Fig. 3 zu sehen werden dem HF-Modul 4 Informationsdaten zugeführt, wenn von der Feststation 1 zu einem Mobilteil 2, 3... mittels der Antenne 6 gesendet werden soll und von dem HF-Modul 4 werden Informationsdaten ausgegeben, wenn Daten von Mobilteilen empfangen werden. Das HF-Modul 4 moduliert die digitalen codierten Informationsdaten auf eine Trägerfrequenz fx. Die aktuell zu verwendende Trägerfrequenz fx wird dabei von einer Trägerfrequenz-Sequenzeinheit vorgegeben, die allgemein mit 20 bezeichnet ist.

Wie in Fig. 3 dargestellt, sind die Hauptbestandteile der Trägerfrequenz-Sequenzeinheit 20 eine erste Berechnungseinrichtung, die allgemein mit 25 bezeichnet ist, sowie eine zweite Berechnungseinrichtung 26. Weiterhin ist eine Schalteinrichtung 27 vorgesehen. Diese Schalteinrichtung 27 wird wie gezeigt von dem Prozessor 22 angesteuert und wählt aus, ob die erste Berechnungseinrichtung 25 oder die zweite Berechnungseinrichtung 26 den aktuellen Wert für die Trägerfrequenz fx vorgeben soll.

In der ersten Berechnungseinrichtung 25 ist eine Erfassungseinrichtung 24 vorgesehen, der das demodulierte Signal von dem HF-Modul 4 zugeführt wird. Störung bedeutet dabei, daß entweder eine Störung im eigentlichen Sinne oder eine Belegung durch einen anderen Sender vorliegt. Eine Störung im Sinne der vorliegenden Beschreibung kann also dadurch erfaßt werden, daß ein empfangenes Signal auf einer Trägerfrequenz demoduliert wird und erfaßt wird, ob auf dieser Trägerfrequenz ein Signalpegel vorliegt oder nicht.

Störungen in eigentlichen Sinne können anhand von CRC-Fehlern oder Burst-Verlusten erfaßt werden.

Die Erfassungseinrichtung 24 bestimmt also anhand des demodulierten Signals von dem HF-Modul 4, wie hoch der auf eine bestimmte Trägerfrequenz fx aufmodulierte Signalanteil ist bzw. ob ein Burst- oder CRC-Fehler aufgetreten ist. Falls der erfaßte Signalanteil über einem vorbestimmten Grenzwert liegt oder einer der oben genannten Fehler aufgetreten ist, gibt die Erfassungseinrichtung 24 ein Störungs-Erfassungssignal zu einer Sperr-/Freigabeeinheit 21. Abhängig von dem Störer-Erfassungssignal von der Erfassungseinrichtung 24 gibt die Sperr/Freigabeeinheit 21 eine Sperrung-/Freigabeinformation zu einem Prozessor 23. Diese Sperr-/Freigabeinformation zeigt an, welche der Trägerfrequenzen fx aufgrund der Erfassung einer Störung durch die Erfassungseinrichtung 24 gesperrt bzw. wieder freigegeben sind, wie später erläutert werden wird.

Mittels der Erfassungseinrichtung 24 und der Sperr-/Freigabeeinrichtung 21 wird also eine unabhängige Prozedur geschaffen, durch die gestörte Frequenzen gesperrt und wieder freigegeben werden können. Neben den Sperr-Freigabeinformationen von der Sperr-/Freigabeeinheit 21 wird dem Prozessor 23 eine Sequenz von einem Zufallsgenerator 22 zugeführt. Aufgrund eines in dem implizierten Zufallsalgorithmus erzeugt der Zufallsgenerator 22 eine zufällig verteilte Abfolge an Trägerfrequenzwerten innerhalb des vorbestimmten Frequenzbandes. Der Zufallsgenerator 22 führt somit eine von der Prozedur der Frequenzsperrung für den Fall einer Störung unabhängige Prozedur aus.

Die zweite Berechnungseinrichtung 26 ist zur Implementierung eines zweiten, von dem ersten in der ersten Berechnungseinrichtung 25 realisierten Algorithmus unabhängigen Algorithmus vorgesehen. Wie ersichtlich gibt es bei dem zweiten, in der zweiten Berechnungseinrichtung 26 realisierten Algorithmus keine Möglichkeit zur Frequenzsperrung. Der zweite Algorithmus kann beispielsweise bei der Anmeldung eines Mobilteils an der Basisstation 1 von der Basisstation 1 bestimmt werden, so daß nach der Anmeldung kein weiterer Informationsaustausch zwischen der Basisstation und dem Mobilteil hinsichtlich dieses zweiten Algorithmus notwendig ist.

Die zweite Berechnungseinrichtung 26 kann den zweiten Algorithmus beispielsweise durch einen in ihr enthaltenen Zufallszahlengenerator erzeugen. Als Alternative oder zusätzlich kann in der zweiten Berechnungseinrichtung 26 auch eine Frequenztabelle vorgesehen sein, die von der zweiten Berechnungseinrichtung 26 sequentiell abgearbeitet wird. In der Frequenztabelle sind also die zu verwendenden Trägerfrequenzwerte für die Trägerfrequenzen mit dem Laufparameter n×m vorgesehen, d. h. für den Fall, daß die Trägerfrequenz nach der Zeitdauer eines Rahmens gewechselt wird, für jeden m-ten Rahmen. Die Frequenztabelle kann beispielsweise von der PIN-Codenummer des angemeldeten Mobilteils 2 abgeleitet sein, wodurch voneinander unabhängige Mobilfunksysteme bestehend jeweils aus einer Basisstation und wenigstens einem Mobilteil verschiedene Tabellen nutzen.

Wie in Figur 3 durch Pfeile von dem Prozessor 23 zu den Zufallszahlengenrator 22 bzw. zu der zweiten Berechnungseinrichtung 26 angedeutet ist, gibt der Prozessor 23 zu diesen Bauteilen verschiedene Informationen aus. Der Zufallszahlengenarator 22 erhält bspw. die Information, wieviel verschiedene Werte er erzeugen soll.

Insbesondere in einem Mobilteil kann der Prozessor 23 dem Zufallszahlengenerator 22 darüberhinaus einen Startwert für dessen Algorithmus vorgeben. Diesen Startwert erhält das Mobilteil bei der Synchronisierung mitgeteilt, die dadurch erreicht werden kann, daß Mobilteil und Feststation denselben Startwert und denselben Algorithmus verwenden.

Die zweite Berechnungseinrichtung 26 bekommt vom dem Prozessor 22 Informationen hinsichtlich der Periodizität des Idle Locked Mode, d.h. des Werts von m.

Bezugnehmend auf Fig. 4 soll nun die Betriebsweise einer erfindungsgemäßen Feststation 1 bzw. das erfindungsgemäße Verfahren näher erläutert werden. Wie in Fig. 4 dargestellt wird beispielsweise während eines Rahmens Rx einer mobilen Funkübertragung eine Trägerfrequenz f1 verwendet, wie in Fig. 4 schraffiert dargestellt ist. Diese Frequenz f1 ist also der erste Wert der durch den Zufallsgenerator 22 erzeugten Sequenz, der dem Prozessor 23 zugeführt wird, der wiederum dementsprechend das HF-Modul 4 ansteuert. Für den Rahmen R2 sei angenommen, daß der Zufallsgenerator 22 aufgrund seiner berechneten Frequenz einen Frequenzsprung P1 auf eine Trägerfrequenz f3 vorschreibt.

Nunmehr sei der Fall angenommen, daß die Erfassungseinrichtung 24 beispielsweise bei einer vorherigen Übertragung erfaßt hat, daß die Trägerfrequenz f₂ gestört ist, die Erfassungseinrichtung 24 also ein dementsprechendes Störsignal an die Sperr/Freigabeeinheit 21 gegeben hat, die wiederum eine Sperrung der Frequenz f2 der dem Prozessor 23 angezeigt hat. Weiterhin sei angenommen, daß der Zufallsgenerator 22 anhand seiner ermittelten Sequenz für den Rahmen R3 die zuvor als gestört erfaßte Trägerfrequenz f2 vorschreibt. Ausgehend von der Koinzidenz der vorgeschriebenen Trägerfrequenz f2 gemäß der Sequenz des Zufallsgenerators 22 und gleichzeitig des Sperrsignals von der Sperr-/Freigabeeinheit 21 für dieselbe Trägerfrequenz f2 ersetzt nun der Prozessor 23 die eigentlich vorgeschriebene, aber als gestört erfaßte Trägerfrequenz f2 für den Rahmen R3 durch eine von der Erfassungseinrichtung 24 als nicht gestört erfaßte Trägerfrequenz, beispielsweise die Trägerfrequenz f4, wie durch den Frequenzsprung-Pfeil P3 angezeigt ist. Anstelle der eigentlich durch die Sequenz vorgeschriebenen Trägerfrequenz f2 wird also das HF-Modul 4 auf die Ersatz-Trägerfrequenz f4 angesteuert. Durch Ersetzen der als gestört erfaßten Trägerfrequenz wird also eine modifizierte Sequenz an Trägerfrequenzen geschaffen. Die modifizierte Sequenz weist dabei nur ungestörte Trägerfrequenzen auf. Dadurch, daß eine als gestört erfaßte Trägerfrequenz ersetzt wird und nicht übersprungen wird durch Übergang zur folgenden Trägerfrequenz, werden die Positionen der ungestörten Trägerfrequenzen in der modifizierten Sequenz im Vergleich zur ursprünglichen Sequenz nicht verändert.

Grundlage dieser modifizierten Sequenz bestehend nur aus ungestörten Trägerfrequenzen fx sind also zwei überlagerte, voneinander unabhängige Prozeduren (Zufallsgenerator 22 bzw. Sperr-/Freigabeeinheit 211. Die erste Prozedur beinhaltet den Zufallsgenerator 22, der Werte zwischen 0 und N erzeugt, wobei N die Anzahl der möglichen Trägerfrequenzen ist. Die zweite Prozedur sperrt wie oben erläutert gestörte Frequenzen. Diese Sperrung kann von der Sperr-/Freigabeeinheit 21 wieder aufgehoben werden, sobald eine neuerliche Erfassung durch die Erfassungseinrichtung 24 anzeigt, daß die ehemals gestörte Trägerfrequenz nunmehr nicht mehr gestört ist. Für diesen Fall gibt die Sperr-/Freigabeeinheit 21 ein Freigabesignal zu dem Prozessor 23, das anzeigt, daß der Prozessor 23 die ehemals gestörte Trägerfrequenz nunmehr nicht mehr durch eine andere Trägerfrequenz ersetzen muß.

Alternativ kann die Sperr-/Freigabeeinheit 21 automatisch ohne neuerliche Erfassung durch die Erfassungseinrichtung 24 ein Freigabesignal an den Prozessor 23 ausgeben, sobald eine vorbestimmte Zeitdauer abgelaufen ist. Jede der genannten Prozeduren gewährleistet also für sich, daß das gesamte vorgegebene Frequenzspektrum gleich verteilt genutzt wird. Durch die Anpassung der Zeiten in der Prozedur zum Sperren von Frequenzen können somit Normen wie bspw. die US-Vorschrift FCC part 15, eingehalten werden, die Obergrenzen für die auf einer Trägerfrequenz ausgesendete Energie auferlegen.

Der Zufallszahlengenerator 22 ist in bekannter Weise aufgebaut und wird daher im Zuge der vorliegenden Beschreibung nicht weiter erläutert. Von Bedeutung ist indessen, daß der Zufallsgenerator unabhängig von der Sperr-/Freigabeprozedur betrieben wird. Ein identischer Zufallszahlengenerator ist im übrigen in jedem Mobilteil 2, 3 implementiert.

Die Feststation 1 ist der Master bei der Frequenzzuweisung, d. h. zu Beginn eines Verbindungsaufbaus wird der Zufallszahlengenerator in einem Mobilteil mit dem Zustand des Zufallszahlengenerators 22 der Feststation 1 initialisiert. Anschließend erzeugen die Zufallszahlengeneratoren im Mobilteil 2, 3 ... und in der Feststation 1 synchron im Takt und autonom voneinander die gleichen Trågerfrequenzwerte.

Die Prozedur zur Frequenzsperrung, die durch die Erfassungseinrichtung 24 und die Sperr-/Freigabeeinheit 21 ausgeführt wird, verwendet während der gesamten Verbindungszeit zwischen der Feststation 1 und einem Mobilteil 2, 3 ... ein unidirektionales Protokoll auf der Luftschnittstelle. Wird von der Erfassungseinrichtung 24 eine der n möglichen Frequenzen fx von der Feststation 1 als gestört befunden, so teilt also die Feststation 1 allen Mobilteilen, mit denen es Verbindungen betreibt, mit, daß diese gestörte Frequenz, wenn sie durch die Sequenz des Zufallszahlengenerators erzeugt wird, durch eine andere, als nicht gestört erfaßte Trägerfrequenz zu ersetzen ist. Der Zufallsgenerator 22 wird durch die Frequenzsperrung nicht beeinflußt. Diese Frequenzsperrung wird von der Sperr/Freigabeeinheit 21 wieder zurückgenommen, wenn die gesperrte Trägerfrequenz zur Übertragung wieder geeignet ist bzw. wenn sie länger als eine vorher definierte Zeit gesperrt war.

Die Erfindung bietet somit mehrere Vorteile. Im Idle Locked Mode können Mobilteile eine Frequenzsperrung der Feststation 1 nicht quittieren da sie ja in dieser besonderen Betriebsart nur empfangen, aber nicht senden können. Sollte indessen der Rahmen mit einer Information zur Frequenzsperrung bei der Übertragung von der Feststation 1 zum Mobilteil (unidirektionales Protokoll) so gestört werden, daß das Mobilteil diese Information der Frequenzsperrung überhaupt nicht erhält, wird durch die synchron laufende Zufallsgeneratoren in der Feststation 1 bzw. den Mobilteilen 2, 3 sichergestellt, daß bei den nicht gesperrten Trägerfrequenzen in den Rahmen nach den Rahmen einer gesperrten Trägerfrequenz die Feststation 1 und alle aktiven Mobilteile die gleiche Trägerfrequenz benutzen.

Gemäß der Erfindung wird in besonders günstiger und einfacher Weise ein sogenannter Multi-Frame-Modus realisierbar. Ein Multi-Frame ist m Rahmen lang. m kann beispielsweise 16 sein. Gemäß der Erfindung wird in jedem m-ten Rahmen der Wert für die Trägerfrequenz fx verwendet, der durch den Algorithmus der zweiten Berechnungseinrichtung 26 ausgegeben ist und der völlig unabhängig von dem ersten Algorithmus ist, der durch die erste Berechnungseinrichtung 25 realisiert ist. Mit anderen Worten, für die Trägerfrequenzen mit der Rahmennummer (n-1)×m +1 bis (n×m)-1, wobei n ein Laufparameter ≥ 1 und m eine vorbestimmte ganze Zahl > 1 ist, wird der erste Algorithmus in der ersten Berechnungseinrichtung 25 verwendet. Für die Trägerfrequenzen mit der Rahmennummer n×m wird dann der Wert des zweiten Algorithmus der zweiten Berechnungseinrichtung 26 verwendet, was in Fig. 3 symbolisch durch eine Umschalteinrichtung 27 dargestellt ist. Hat z. B. der Multi-Frame eine Länge von 16 Rahmen, werden in den Rahmen mit der Nummer 1 bis 15 die Trägerfrequenzen durch den ersten Algorithmus der ersten Berechnungseinrichtung 25 bestimmt, während im Rahmen mit der Nummer 16 die Trägerfrequenz mit dem zweiten Algorithmus bestimmt wird. Somit kann ein Mobilteil, das sich in dem Multi-Frame-Mode befindet, immer mit der Basisstation synchronisiert bleiben, da sich der für den Multi-Frame-Mode verwendete zweite Algorithmus nie verändert. Bei einem tatsächlichen Verbindungsaufbau wird ein Informationsaustausch über den ersten Algorithmus zwischen der Basisstation und dem zu verbindenden Mobilteil durchgeführt. Nach dem Informationsaustausch hinsichtlich des ersten Algorithmus können dann alle Rahmen genutzt werden.

Gemäß der Erfindung wird also sichergestellt, daß Mobilteile, die sich in dem sogenannten Multi-Frame-Modus befinden und nur alle m Rahmen nachsynchronisieren und daher die Signalisierung einer Frequenzsperrung im Idle Locked Mode nicht empfangen können, nicht durch Frequenzsperrungen der Feststation 1 in dem Sinne beeinträchtigt werden, daß ihre Synchronisierung mit der Feststation 1 insgesamt verloren geht.

In Fig. 4 ist das Beispiel dargestellt, daß ein Multi-Frame 5 Rahmen umfaßt. Wie dargestellt werden in diesem Fall die Trägerfrequenzen für die Rahmen mit der Nummer 1 bis 4 durch den ersten Algorithmus vorgegeben. Für den Rahmen mit der Nummer 5 wird der Wert auf Grundlage des zweiten Algorithmus der zweiten Berechnungseinrichtung 26 verwendet. Dieser Wert kann wie in Fig. 4 dargestellt beispielsweise ein Wert sein (Trägerfrequenz f₂), der von der ersten Berechnungseinrichtung eigentlich als gestört erfaßt wurde. Die zweite Berechnungseinheit 26 führt indessen nie Sperrungen von TrägerfrequenzWerten aus und verwendet daher völlig unabhängig von der Erfassung in der ersten Berechnungseinrichtung 25 auch gestörte Trägerfrequenzen.

Gemäß der Erfindung kann also durch Vorsehen von zwei voneinander unabhängigen Algorithmen ein Multi-Frame-Modus realisiert werden.

### Bezugzeichenliste

- 1:: Feststation
- 2:: Mobilteil
- 3:: Mobilteil
- 4.: HF-Modul
- 6:: Antenne Feststation
- 7:: Antenne Mobilteil
- 8:: erster Funkübertragungsweg
- 9:: zweiter Funkübertragungsweg
- 10:: Endstellenleitung
- 20:: Trägerfrequenz-Sequenzeinheit
- 21:: Sperr-/Freigabeeinheit
- 22:: Zufallszahlengenerator
- 23:: Prozessor
- 24:: Erfassungseinrichtung
- 25:: erste Berechnungseinrichtung
- 26:: zweite Berechnungseinrichtung
- 27:: Schalteinrichtung
- fx:: Trägerfrequenz
- Rx:: Rahmen
- Zx:: Zeitschlitz

## Patentansprüche

1. Verfahren zum Erzeugen einer Trägerfrequenz-Sequenz,
**dadurch gekennzeichnet,**
**daß** ein erster Algorithmus den Wert der Trägerfrequenzen fx_{(n-1)m +1} bis fx_{(n×m)-1} vorgibt,
wobei n ein Laufparameter größer oder gleich als eins und m eine vorbestimmte ganze Zahl größer als 1 ist, und daß ein zweiter, von dem ersten Algorithmus unabhängiger Algorithmus (26) den Wert der Trägerfrequenzen fx_{n×m} vorgibt.

2. Verfahren nach Anspruch 1,
**dadurch gekennzeichnet,**
**daß** nur der erste Algorithmus eine Möglichkeit zur Sperrung (21) gewisser Werte und zum Ersetzen (23) der gesperrten Werte durch einen anderen Wert aufweist.

3. Verfahren nach einem der vorhergehenden Ansprüche,
**dadurch gekennzeichnet,**
**daß** der zweite Algorithmus bei einer Anmeldung eines Mobilteils (2) an eine Basisstation (1) von der Basisstation (1) festgelegt wird.

4. Verfahren nach einem der vorhergehenden Ansprüche,
**dadurch gekennzeichnet,**
**daß** der erste Algorithmus zu Beginn eines Aufbaus einer Verbindung zwischen einem Mobilteil (2) und einer Basisstation (1) festgelegt wird.

5. Verfahren nach einem der vorhergehenden Ansprüche,
**dadurch gekennzeichnet,**
**daß** der zweite Algorithmus durch einen Zufallszahlengenerator realisiert wird.

6. Verfahren nach einem der Ansprüche 1 bis 4,
**dadurch gekennzeichnet,**
**daß** der zweite Algorithmus durch eine sequentiell abzuarbeitende Frequenztabelle erzeugt wird.

7. Verfahren nach Anspruch 6,
**dadurch gekennzeichnet,**
**daß** die Frequenztabelle anhand der PIN-Codenummer des Mobilteils (2) bestimmt wird.

8. Verfahren nach einem der vorhergehenden Ansprüche,
**dadurch gekennzeichnet,**
**daß** m = 16 gewählt wird.

9. Einrichtung zum Erzeugen einer Trägerfrequenz-Sequenz,
**dadurch gekennzeichnet,**
**daß** eine erste Berechnungseinrichtung (25) für einen ersten Algorithmus angeordnet ist, der den Wert der Trägerfrequenzen fx₍ₙ₋₁₎ₘ₊₁ bis fx_{(n×m)-1} vorgibt,
wobei n ein Laufparameter größer oder gleich als eins und m eine vorbestimmte ganze Zahl größer als 1 ist, und daß eine zweite Berechnungseinrichtung (26) für einen zweiten, von dem ersten Algorithmus unabhängigen Algorithmus angeordnet ist, der den Wert der Trägerfrequenzen fxₙₓₘ vorgibt

10. Einrichtung nach Anspruch 9,
**dadurch gekennzeichnet,**
**daß** die erste Berechnungseinrichtung (25) für den ersten Algorithmus eine Einrichtung (21) zur Sperrung gewisser Werte und eine Einrichtung (23) zum Ersetzen der gesperrten Werte durch andere Werte aufweist.

11. Einrichtung nach einem der Ansprüche 9 oder 10,
**dadurch gekennzeichnet,**
**daß** die zweite Berechnungseinrichtung (26) in einer Basisstation (1) angeordnet ist und den zweiten Algorithmus bei der Anmeldung eines Mobilteils (2) an die Basisstation (1) festlegt.

12. Einrichtung nach einem der Ansprüche 9 bis 11,
**dadurch gekennzeichnet,**
**daß** die erste Berechnungseinrichtung (25) in einer Basisstation (1) angeordnet ist und den ersten Algorithmus zu Beginn eines Aufbaus einer Verbindung zwischen einem Mobilteil (2) und der Basisstation (1) festlegt.

13. Einrichtung nach einem der Ansprüche 9 bis 12,
**dadurch gekennzeichnet,**
**daß** die zweite Berechnungseinrichtung (26) einen Zufallszahlengenerator aufweist.

14. Einrichtung nach einem der Ansprüche 9 bis 13,
**dadurch gekennzeichnet,**
**daß** die zweite Berechnungseinrichtung (26) eine sequentiell abzuarbeitende Frequenztabelle aufweist.

15. Einrichtung nach Anspruch 14,
**dadurch gekennzeichnet,**
**daß** die Frequenztabelle anhand der PIN-Codenummer des Mobilteils bestimmt ist.

16. Einrichtung nach einem der Ansprüche 9 bis 15,
**dadurch gekennzeichnet,**
**daß** m = 16 gewählt ist.

17. Basisstation für Mobilfunkanwendungen,
**dadurch gekennzeichnet,**
**daß** sie eine Einrichtung (20) nach einem der Ansprüche 9 bis 14 aufweist.

18. Mobilfunksystem mit einer Basisstation und wenigstens einem Mobilteil,
**dadurch gekennzeichnet,**
**daß** es eine Basisstation (1) nach Anspruch 17 aufweist.

## Claims

1. A method for generating a carrier frequency sequence, **characterized in that** a first algorithm predefines the value of the carrier frequencies fx₍ₙ₋₁₎ₘ₊₁ to fx₍ₙₓₘ₎₋₁,
n being a run time parameter of greater than or equal to one and m being a predetermined integral number of greater than 1, and **in that** a second algorithm (26) independent of the first algorithm predetermines the value of the carrier frequencies fxₙₓₘ.

2. The method as claimed in claim 1, **characterized in that** only the first algorithm exhibits a possibility for blocking (21) certain values and for replacing (23) blocked values by another value.

3. The method as claimed in one of the preceding claims, **characterized in that** the second algorithm is defined by the base station (1) when a mobile part (2) registers at a base station (1).

4. The method as claimed in one of the preceding claims, **characterized in that** the first algorithm is defined at the beginning of the setting-up of a connection between a mobile part (2) and a base station (1).

5. The method as claimed in one of the preceding claims, **characterized in that** the second algorithm is implemented by a random number generator.

6. The method as claimed in one of claims 1 to 4, **characterized in that** the second algorithm is generated by a frequency table to be processed sequentially.

7. The method as claimed in claim 6, **characterized in that** the frequency table is determined by means of the PIN code number of the mobile part (2).

8. The method as claimed in one of the preceding claims, **characterized in that** m = 16 is selected.

9. A device for generating a carrier frequency sequence, **characterized in that** a first calculating device (25) for a first algorithm is arranged which predefines the value of the carrier frequencies fx₍ₙ₋₁₎ₘ₊₁ to fx₍ₙₓₘ₎₋₁,
where n is a run time parameter of greater than or equal to one and m is a predetermined integral number of greater than 1, and **in that** a second calculating device (26) for a second algorithm independent of the first algorithm is arranged which predefines the value of the carrier frequencies fxₙₓₘ.

10. The device as claimed in claim 9, **characterized in that** the first calculating device (25) for the first algorithm exhibits a device (21) for blocking certain values and a device (23) for replacing the blocked values by other values.

11. The device as claimed in one of claims 9 or 10, **characterized in that** the second calculating device (26) is arranged in a base station (1) and defines the second algorithm when a mobile part (2) registers at the base station (1).

12. The device as claimed in one of claims 9 to 11, **characterized in that** the first calculating device (25) is arranged in a base station (1) and defines the first algorithm at the beginning of the setting-up of a connection between a mobile part (2) and the base station (1).

13. The device as claimed in one of claims 9 to 12, **characterized in that** the second calculating device (26) exhibits a random number generator.

14. The device as claimed in one of claims 9 to 13, **characterized in that** the second calculating device (26) exhibits a frequency table to be processed sequentially.

15. The device as claimed in claim 14, **characterized in that** the frequency table is determined by means of the PIN code number of the mobile part.

16. The device as claimed in one of claims 9 to 15, **characterized in that** m = 16 is selected.

17. A base station for mobile radio applications, **characterized in that** it exhibits a device (20) as claimed in one of claims 9 to 14.

18. A mobile radio system comprising a base station and at least one mobile part, **characterized in that** it exhibits a base station (1) as claimed in claim 17.

## Revendications

1. Procédé pour produire une séquence de fréquences porteuses
**caractérisé**
**en ce qu'**un premier algorithme prescrit la valeur des fréquences fx_{(n-1)m + 1} à fx_{(n x m)-1} porteuses,
n étant un paramètre variable supérieur ou égal à 1 et m étant un nombre entier prédéterminé supérieur à 1, et en ce qu'un deuxième algorithme (26), indépendant du premier algorithme, prescrit la valeur des fréquences fx_{n x m} porteuses.

2. Procédé suivant la revendication 1, **caractérisé en ce que** seul le premier algorithme comporte une possibilité pour le blocage (21) de certaines valeurs et pour le remplacement (23) des valeurs bloquées par une autre valeur.

3. Procédé suivant l'une des revendications précédentes,
**caractérisé en ce que** le deuxième algorithme est déterminé par la station (1) de base lorsqu'une partie (2) mobile s'annonce à une station (1) de base.

4. Procédé suivant l'une des revendications précédentes,
**caractérisé en ce que** le premier algorithme est déterminé au début d'un établissement d'une liaison entre une partie (2) mobile et une station (1) de base.

5. Procédé suivant l'une des revendications précédentes,
**caractérisé en ce que** le deuxième algorithme est réalisé par un générateur de nombres aléatoires.

6. Procédé suivant l'une des revendications 1 à 4, **caractérisé en ce que** le deuxième algorithme est produit par une table de fréquences à traiter séquentiellement.

7. Procédé suivant la revendication 6, **caractérisé en ce que** la table de fréquences est déterminée à l'aide du numéro de code PIN de la partie (2) mobile.

8. Procédé suivant l'une des revendications précédentes,
**caractérisé en ce que** m est choisi égal à 16.

9. Dispositif pour produire une séquence de fréquences porteuses
**caractérisé**
**en ce qu'**il est monté un premier dispositif (25) de calcul pour un premier algorithme qui prescrit la valeur des fréquences fx₍ₙ₋₁₎ₘ₊₁ à fx_{(n x m)-1} porteuses,
n étant un paramètre variable supérieur ou égal à 1 et m étant un nombre entier prédéterminé supérieur à 1, et en ce qu'il est monté un deuxième dispositif (26) de calcul pour un deuxième algorithme qui est indépendant du premier algorithme et qui prescrit la valeur des fréquences fx_{n x m} porteuses.

10. Dispositif suivant la revendication 9, **caractérisé en ce que** le premier dispositif (25) de calcul pour le premier algorithme comporte un dispositif (21) pour le blocage de certaines valeurs et un dispositif (23) pour le remplacement des valeurs bloquées par d'autres valeurs.

11. Dispositif suivant l'une des revendications 9 ou 10,
**caractérisé en ce que** le deuxième dispositif (26) de calcul est monté dans une station (1) de base et fixe le deuxième algorithme lorsqu'une partie (2) mobile s'annonce à la station (1) de base.

12. Dispositif suivant l'une des revendications 9 à 11,
**caractérisé en ce que** le premier dispositif (25) de calcul est monté dans une station 1 de base et fixe le premier algorithme au début d'un établissement d'une liaison entre une partie (2) mobile et la station (1) de base.

13. Dispositif suivant l'une des revendications 9 à12, **caractérisé en ce que** le deuxième dispositif (26) de calcul comporte un générateur de nombres aléatoires.

14. Dispositif suivant l'une des revendications 9 à 13,
**caractérisé en ce que** le deuxième dispositif (26) de calcul comporte une table de fréquences à traiter séquentiellement.

15. Dispositif suivant la revendication 14, **caractérisé en ce que** la table de fréquences est déterminée à l'aide du numéro de code PIN de la partie mobile.

16. Dispositif suivant l'une des revendications 9 à 15,
**caractérisé en ce que** m est choisi égal à 16.

17. Station de base pour des applications à la radiotransmission mobile, **caractérisée en ce qu'**elle comporte un dispositif (20) suivant l'une des revendications 9 à 14.

18. Système de radiocommunication mobile comportant une station de base et au moins une partie mobile, **caractérisé en ce qu'**il comporte une station (1) de base suivant la revendication 17.
